Europäisches Patentamt

European Patent Office

Office européen des brevets

(11) Veröffentlichungsnummer: **0 235 579**
**A2**

## (12) EUROPÄISCHE PATENTANMELDUNG

(21) Anmeldenummer: **87101284.5**

(22) Anmeldetag: **30.01.87**

(51) Int. Cl.⁴: **B60C 9/22**

(30) Priorität: **04.03.86 DE 3606934**

(43) Veröffentlichungstag der Anmeldung:
**09.09.87 Patentblatt 87/37**

(84) Benannte Vertragsstaaten:
**AT BE CH DE ES FR GB GR IT LI LU NL SE**

(71) Anmelder: **Continental Gummi-Werke Aktiengesellschaft**
**Königsworther Platz 1 Postfach 169**
**D-3000 Hannover 1(DE)**

(72) Erfinder: **Holzbach, Wolfgang, Dr.**
**Landwehrriethe 15**
**D-3008 Garbsen 9(DE)**
Erfinder: **Sergel, Horst**
**Fuchsrain 20 A**
**D-3000 Hannover 51(DE)**

(54) **Fahrzeugluftreifen.**

(57) Die Erfindung bezieht sich auf einen Fahrzeugluftreifen mit einer seinen Gürtel umschließenden Bandage, deren Festigkeitsträger in oder praktisch in Reifenumfangsrichtung verlaufen. Um die Bandagen beim Herstellen des Reifens einstückig aufbringen und zugleich so ausbilden zu können, daß sie im Bereich der Gürtelränder besonders wirkungsvoll sind, ist die Bandage so ausgeführt, daß ihre Fadendichte im Mittelbereich geringer ist im Vergleich zu den Bandagenrändern. Die Fadendichte soll sich dabei allmählich verändern.

## Fahrzeugluftreifen

Die Erfindung betrifft einen Fahrzeugluftreifen mit einer seinen Gürtel umschließenden Bandage, deren Festigkeitsträger in oder praktisch in Reifenumfangsrichtung verlaufen.

Bandagen dieser Ausbildung haben den Vorteil der besonderen Zugfestigkeit in Reifenumfangsrichtung. Aus diesen Gründen sind mit diesen Bandagen ausgestattete Fahrzeugluftreifen in besonderer Weise hochgeschwindigkeitstauglich. Zudem ergibt sich auch eine gleichmäßige Abnutzung.

Es ist bereits bekannt, Reifengürteln Bandagen zuzuordnen, deren Fäden sich ausschließlich im Randbereich des Gürtels befinden. Demgemäß ist die Bandage zweiteilig ausgeführt. Die so ausgeführten Reifen haben jedoch vorwiegend die vorerwähnten sogenannten Kantenbandagen deshalb, weil die beiden Einzelbandagen eine Verformung der Gürtelränder verhindern sollen. Darüber hinaus sind diese Bandagen aufwendig, weil sie zweiteilig ausgeführt sind.

Der Erfindung liegt im wesentlichen die Aufgabe zugrunde, Reifen der eingangs erwähnten Art so auszubilden, daß deren Bandagen keinen besonderen Herstellungsaufwand erfordern und daß darüber hinaus bei einstückiger Ausbildung der Bandage im Bereich der Laufflächenmitte eine im Vergleich zu den Laufflächenrändern bessere Verformbarkeit der Laufstreifenzone erreicht werden kann, ohne dazu weitere zusätzliche Maßnahmen für die Bandage vorsehen zu müssen.

Zur Lösung dieser Aufgabe ist erfindungsgemäß die Fadendichte im Mittelbereich der Bandage geringer im Vergleich zur Dichte im Bandagenrandbereich. Vorzugsweise werden diese Bandagen so ausgeführt, daß sich die Fadendichte allmählich verändert.

Eine so ausgebildete Bandage hat den Vorteil, daß im Gürtelrandbereich eine stärkere Fesselung erzielt wird bzw. im Gürtelmittelbereich eine vergleichsweise große Verformbarkeit erhalten bleibt. Hinzu kommt, daß die Bandage einstückig, z.B. durch Aufspulen gebildet werden kann. Wenn sie an Ort und Stelle auf den Gürtel aufgebracht werden soll, kann der Festigkeitsträger aufgespult und dabei auch sofort die unterschiedliche Fadendichte berücksichtigt werden.

Weitere Einzelheiten der Erfindung werden anhand der Zeichnung erläutert, in der ein Ausführungsbeispiel der Erfindung dargestellt ist. Es zeigen:

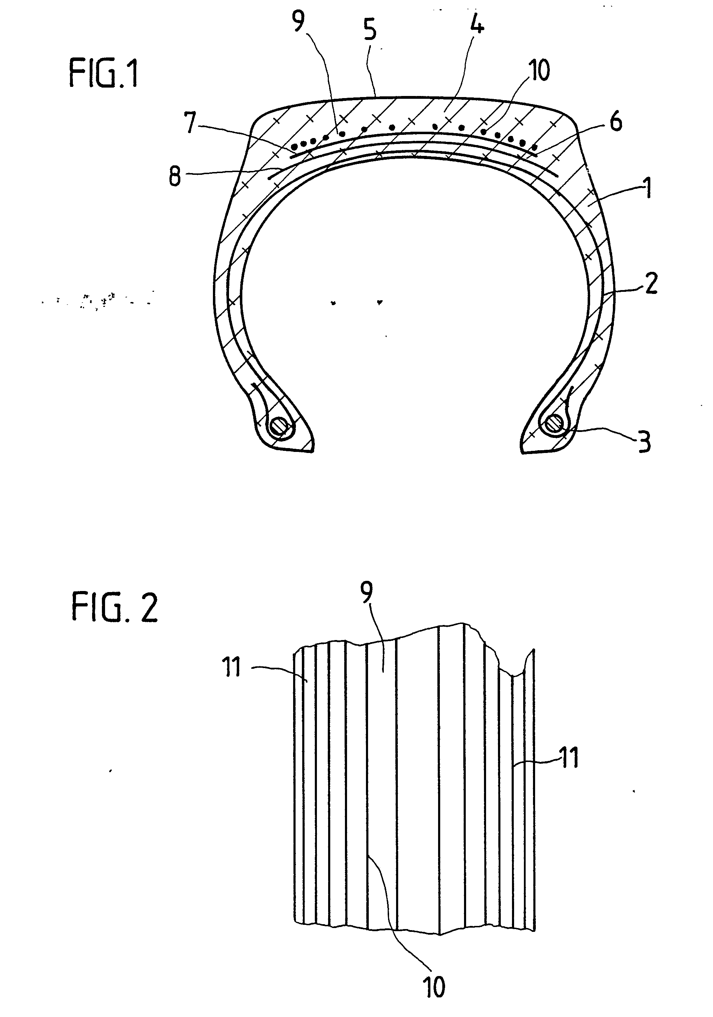

Fig. 1 einen radialen Schnitt durch einen Fahrzeugluftreifen für Personenkraftwagen und

Fig. 2 eine Draufsicht auf die Bandage für einen Reifen gemäß Fig. 1.

Der im wesentlichen aus Gummi bestehende Reifenkörper 1 hat eine Radialkarkasse 2 mit in den Wülsten 3 verankerten Enden. In der Reifenzenitpartie zwischen der Radialkarkasse 2 und dem Laufstreifen 4 befindet sich ein sich im wesentlichen über die Lauffläche 5 erstreckender Gürtel 6, der aus zwei Lagen 7, 8 bestehen kann, deren einander parallele Festigkeitsträger vorzugsweise einen symmetrischen Kreuzverband bilden.

Nahe oberhalb des Gürtels 6 befindet sich eine einlagige Bandage 9, deren Breite praktisch derjenigen des Gürtels 6 entspricht. Die Bandage 9 besteht aus einem aufgespulten, fadenförmigen, hochfesten Festigkeitsträger 10, der einstückig durch Aufspulen von einem Gürtelrand zum anderen geführt ist, jedoch mit der Besonderheit, daß die Fadendichte in den Randbereichen 11 der Bandage 9 wesentlich größer ist im Vergleich zum Mittelbereich der Bandage 9. Damit ergibt sich eine Massierung der Festigkeitsträger 10 im Bereich der Laufflächenränder, ohne die Bandagenwirkung in der Laufstreifenmitte aufzuheben. Die Bandage ist somit auch noch in der Laufflächenmitte wirksam.

Es versteht sich daß der Festigkeitsträger 10 in Längsrichtung sehr zugfest sein muß. Aus diesem Grunde kann der Festigkeitsträger 10 auch aus Stahl oder einem Werkstoff ähnlich hoher Zugfestigkeit hergestellt sein.

## Ansprüche

1. Fahrzeugluftreifen mit einer seinen Gürtel umschließenden Bandage, deren Festigkeitsträger in oder praktisch in Reifenumfangsrichtung verlaufen, dadurch gekennzeichnet, daß die Fadendichte im Mittelbereich der Bandage (9) geringer ist im Vergleich zur Dichte im Bandagenrandbereich (11).

2. Reifen nach Anspruch 1, dadurch gekennzeichnet, daß sich die Fadendichte allmählich verändert.

FIG.1

FIG. 2

ONTINENTAL
JMMI-WERKE AG
ANNOVER

86-13 P